(19) Europäisches Patentamt / European Patent Office / Office européen des brevets

(11) **EP 3 565 036 A1**

(12) **EUROPEAN PATENT APPLICATION**
published in accordance with Art. 153(4) EPC

(43) Date of publication:
**06.11.2019 Bulletin 2019/45**

(51) Int Cl.:
**H01M 4/14** *(2006.01)*      **H01M 10/12** *(2006.01)*

(21) Application number: **17914084.3**

(22) Date of filing: **13.06.2017**

(86) International application number:
**PCT/JP2017/021846**

(87) International publication number:
**WO 2018/229875 (20.12.2018 Gazette 2018/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Hitachi Chemical Company, Ltd.**
**Chiyoda-ku**
**Tokyo 100-6606 (JP)**

(72) Inventors:
• **SHIMADA Kohei**
  **Tokyo 100-6606 (JP)**
• **KIMURA Takayuki**
  **Tokyo 100-6606 (JP)**

(74) Representative: **Hoffmann Eitle**
**Patent- und Rechtsanwälte PartmbB**
**Arabellastraße 30**
**81925 München (DE)**

(54) **LIQUID-TYPE LEAD STORAGE BATTERY**

(57) A liquid-type lead storage battery includes a positive electrode plate and a negative electrode plate alternately layered through a separator, wherein the liquid-type lead storage battery further includes a porous film arranged between the positive electrode plate and the negative electrode plate, the positive electrode plate has a positive electrode active material containing $PbO_2$, and a ratio ($\alpha$-$PbO_2$/$\beta$-$PbO_2$) between peak intensities of $\alpha$-$PbO_2$ and $\beta$-$PbO_2$ in an X-ray diffraction pattern in the positive electrode active material is 0.60 or less.

**Fig.1**

EP 3 565 036 A1

**Description**

**Technical Field**

The present invention relates to a liquid-type lead storage battery.

**Background Art**

In recent years, in the automobile field, various measures to improve fuel consumption have been investigated in order to prevent air pollution or global warming. As for the automobile in which the measures to improve the fuel consumption are taken, for example, a micro-hybrid vehicle, such as a vehicle with a start-stop system (idling stop system, hereinafter referred to as "ISS vehicle") which reduces an operation time of an engine, and a power generation control vehicle which reduces generation of an alternator driven by engine power, has been investigated.

In the ISS vehicle, the number of times of starting the engine increases, and accordingly large current discharge of a lead storage battery is repeated. When relatively deep charge and discharge are repeated, a lead storage battery having insufficient high rate discharge performance fails to restart the engine, for example, due to the decrease in battery voltage after an idling stop. In recent years, improvement in the low-temperature high-rate discharge performance has been particularly an important issue for enabling use below the freezing point in cold districts.

Regarding the above issue, a technology is disclosed in Patent Literature 1, which improves the low-temperature high-rate discharge performance by using a lignin sulfonate having a conjugated double bond as lignin sulfonate contained in a negative electrode active material.

**Citation List**

**Patent Literature**

Patent Literature 1: Japanese Unexamined Patent Publication No. H9-147871

**Summary of Invention**

**Technical Problem**

Incidentally, in recent years, reduction in the amount of the positive electrode active material for use in a positive electrode has been required from the perspectives of manufacturing cost reduction and weight reduction of lead storage batteries and the like. In the case where the amount of positive electrode active material for use is reduced, however, the battery capacity decreases with reduction in the amount of positive electrode active material for use, so that the discharge may not be maintained for a sufficiently long time under low-temperature conditions in some cases.

Also, in an ISS vehicle and a micro-hybrid vehicle, large current charging of a lead storage battery is repeated even though for a short time due to regenerative charging and the like. It is known that repetition of large current charging causes electrolysis of water in an electrolytic solution. The occurrence of electrolysis results in discharging oxygen gas and hydrogen gas generated from the decomposition of water outside the battery, so that water in the electrolytic solution decreases. As a result, the sulfuric acid concentration in the electrolytic solution increases, so that capacity reduction proceeds due to corrosion deterioration of the electrode (positive electrode and the like) or the like. From such reasons, when water in the electrolytic solution of a lead storage battery decreases, maintenance to compensate the decreased amount of water is required. From the perspective of achieving a maintenance-free lead storage battery, however, the decrease of water in an electrolytic solution (liquid reduction) is required to be suppressed.

It is an object of the present invention, in the light of these circumstances, to provide a liquid-type lead storage battery excellent in low-temperature high-rate discharge performance, capable of suppressing liquid reduction of an electrolytic solution, even with a reduced amount of the positive electrode active material for use.

**Solution to Problem**

Through intensive study, the present inventors have found that use of a positive electrode active material containing $PbO_2$, with a ratio between peak intensities of $\alpha$-$PbO_2$ and $\beta$-$PbO_2$ in an X-ray diffraction pattern as determined by wide-angle X-ray diffraction being controlled in a specific range, may improve the low-temperature high-rate discharge performance per unit mass of the positive electrode active material, and have also found that arrangement of a porous film between a positive electrode plate and a negative electrode plate can suppress the liquid reduction of an electrolytic solution. Based on the findings, the present inventors have accomplished the present invention.

In other words, the liquid-type lead storage battery in an aspect of the present invention is a liquid-type lead storage battery that includes a positive electrode plate and a negative electrode plate alternately layered through a separator, wherein the liquid-type lead storage battery further includes a porous film arranged between the positive electrode plate and the negative electrode plate, the positive electrode plate has a positive electrode active material containing $PbO_2$, and a ratio ($\alpha$-$PbO_2$/$\beta$-$PbO_2$) between peak intensities of $\alpha$-$PbO_2$ and $\beta$-$PbO_2$ in an X-ray diffraction pattern in the positive electrode active material is 0.60 or less.

According to the liquid-type lead storage battery described above, excellent low-temperature high-rate discharge performance can be obtained even with a reduced amount of the positive electrode active material for use. In other words, according to the liquid-type lead storage battery described above, long-time discharge can be maintained under low-temperature conditions, even with a reduced amount of the positive electrode active material for use. Also, according to the liquid-type lead storage battery described above, the liquid reduction of the electrolytic solution can be suppressed.

In an aspect, the porous film is a glass mat.

In an aspect, the specific surface area of the positive electrode active material is 7.0 $m^2$/g or more.

In an aspect, the content of the positive electrode active material is 60 mass% or less based on the total mass of the positive electrode plate.

In an aspect, the distance between the porous film and the positive electrode plate, or the distance between the porous film and the negative electrode plate is 2.0 mm or less.

In an aspect, the porous film is in contact with the positive electrode plate.

In an aspect, when viewed in the layering direction of the positive electrode plate and the negative electrode plate, the area of the overlapping portion of a region made of the positive electrode active material in the face perpendicular to the layering direction of the positive electrode plate and a face of the porous film perpendicular to the layering direction is 80% or more of the area of the region.

In an aspect, a pore diameter of the porous film is 200 $\mu$m or less.

In an aspect, a thickness of the porous film is 0.1 to 2.0 mm.

In an aspect, a porosity of the porous film is 40% or more.

**Advantageous Effects of Invention**

According to the present invention, a liquid-type lead storage battery excellent low-temperature high-rate discharge performance with the liquid reduction of the electrolytic solution being suppressed even with a reduced amount of the positive electrode active material for use can be provided. In other words, according to the present invention, while maintaining the excellent low-temperature high-rate discharge performance of a liquid-type lead storage battery, the amount of the positive electrode active material for use can be reduced and the liquid reduction of the electrolytic solution in the liquid-type lead storage battery can be suppressed. Also, according to the present invention, an application of a lead storage battery to a micro-hybrid vehicle can be provided. Also, according to the present invention, an application of a lead storage battery to an ISS vehicle can be provided.

**Brief Description of Drawings**

Figure 1 is a perspective view showing the overall structure and the internal structure of a lead storage battery in an embodiment.
Figure 2 is a perspective view showing an electrode group of a lead storage battery in an embodiment.
Figure 3 is a schematic cross-sectional view showing the cross-section along arrows I-I in Figure 2.
Figure 4 is a view showing a positive electrode plate and a porous film viewed from the layering direction of positive electrode plates and negative electrode plates.

**Description of Embodiments**

With appropriate reference to drawings, an embodiment of the present invention will be described in detail below.

<Liquid-type lead storage battery>

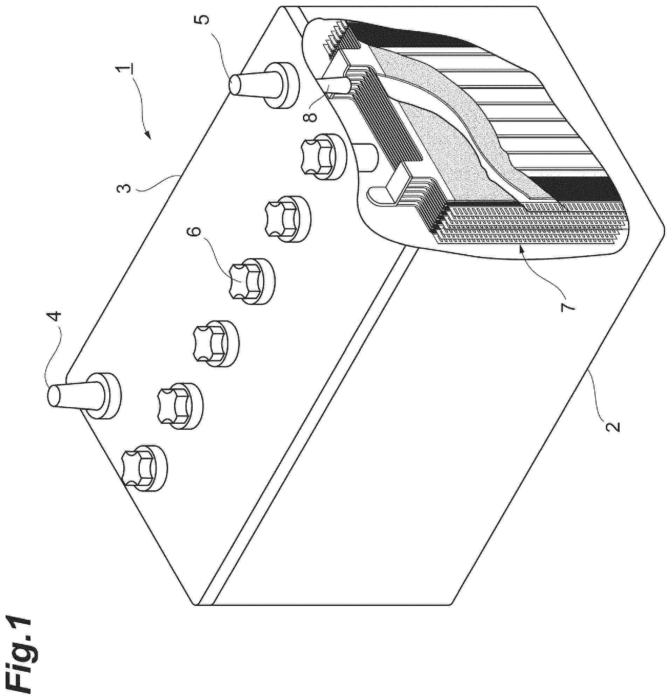

Figure 1 is a perspective view showing the overall structure and the internal structure of a liquid-type lead storage battery in an embodiment (hereinafter also referred to simply as "lead storage battery"). As shown in Figure 1, the lead storage battery 1 in the present embodiment includes a battery case 2 with an open top face and a lid 3 for closing the opening of the battery case 2. The battery case 2 and the lid 3 are made of, for example, polypropylene. The lid 3 is provided with a positive electrode terminal 4, a negative electrode terminal 5, and a hole plug 6 for closing a liquid injection hole in the lid 3.

In the battery case 2, an electrode group 7, a positive electrode column (not shown in drawing) for connecting the electrode group 7 to the positive electrode terminal 4, a negative electrode column 8 for connecting the electrode group 7 to the negative electrode terminal 5, and an electrolytic solution such as dilute sulfuric acid are accommodated.

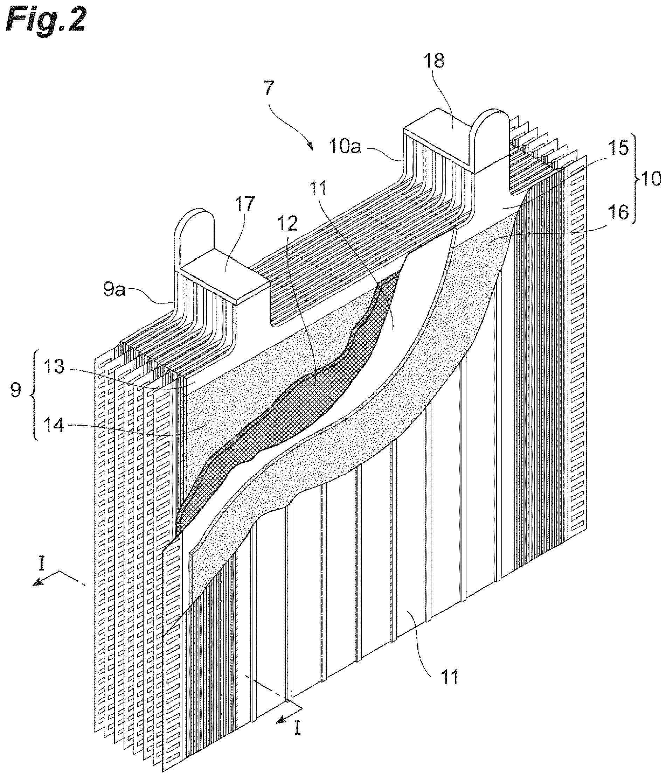

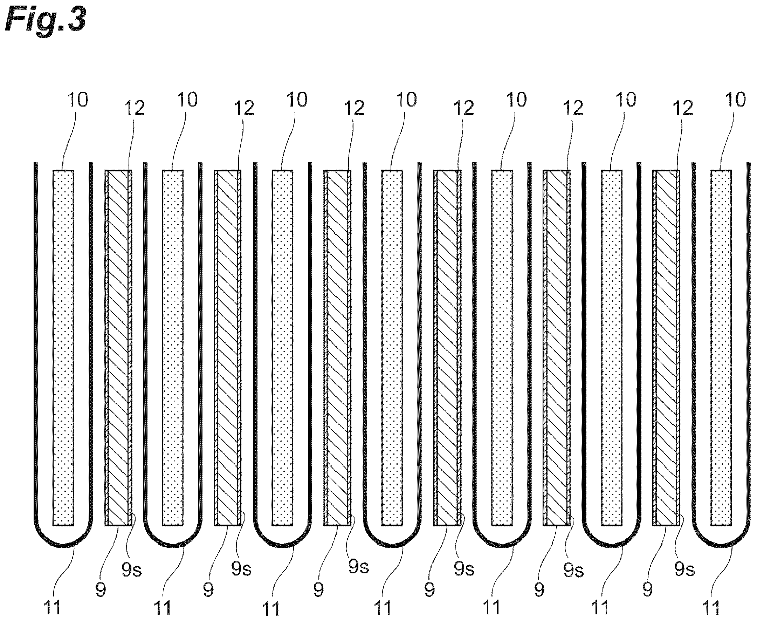

Figure 2 is a perspective view showing the electrode group 7 and Figure 3 is a schematic cross-sectional view showing the cross-section along an I-I line in Figure 2. As shown in Figure 2 and Figure 3, the electrode group 7 includes the positive electrode plate 9, the negative electrode plate 10, a separator 11 and a porous film 12 arranged between the positive electrode plate 9 and the negative electrode plate 10. The positive electrode plate 9 has a positive electrode current collector 13 and a positive electrode active material filling the positive electrode current collector 13, and the positive electrode active material constitutes a positive electrode active material filling part 14. On the other hand, the negative electrode plate 10 has a negative electrode current collector 15 and a negative electrode active material filling the negative electrode current collector 15, and the negative electrode active material constitutes a negative electrode active material filling part 16. Incidentally, in the present specification, the positive electrode plate after formation excluding the positive electrode current collector is referred to as "positive electrode active material" and the negative electrode plate after formation excluding the negative electrode current collector is referred to as "negative electrode active material".

The electrode group 7 has a structure in which a plurality of the positive electrode plates 9 and the negative electrode plates 10 are alternately layered through the separators 11 and the porous films 12, in the direction approximately parallel to the opening face of the battery case 2. In other words, the positive electrode plate 9 and the negative electrode plate 10 are arranged such that the main faces 9s thereof spread in the direction perpendicular to the opening face of the battery case 2. In Figure 2, the main face 9s of the positive electrode plate 9 is a face perpendicular to the layering direction of the positive electrode plate 9 when viewed from the layering direction of the positive electrode plate 9 and the negative electrode plate 10, and the main face of the negative electrode plate 10 is a face perpendicular to the layering direction of the negative electrode plate 10 when viewed from the layering direction of the positive electrode plate 9 and the negative electrode plate 10.

The numbers of the positive electrode plates 9 and the negative electrode plates 10 in the electrode group 7 may be 7 of negative electrode plates relative to 6 of positive electrode plates as shown in Figure 3, or may be 8 of negative electrode plates relative to 7 of positive electrode plates, 8 of negative electrode plates relative to 8 of positive electrode plates, or 9 of negative electrode plates relative to 8 of positive electrode plates. The cycle life properties (for example, ISS cycle performance) tend to be improved with increase of the numbers of the positive electrode plates and the negative electrode plates.

In the electrode group 7, ear portions 9a of a plurality of positive electrode plates 9 are welded together to each other with a positive electrode-side strap 17. In the same manner, ear portions 10a of a plurality of negative electrode plates 10 are welded together to each other with a negative electrode-side strap 18. The positive electrode-side strap 17 and the negative electrode-side strap 18 are connected to the positive electrode terminal 4 and the negative electrode terminal 5 through the positive electrode column and the negative electrode column 8, respectively.

As shown in Figure 3, the negative electrode plate 10 is accommodated in the separator 11 formed in a sack shape. The porous film 12 formed in a sheet shape is installed between the positive electrode plate 9 and the separator 11, in close adherence to the positive electrode plate 9. More specifically, the porous film 12 is in contact with a positive electrode active material filling part 14 in the positive electrode plate 9.

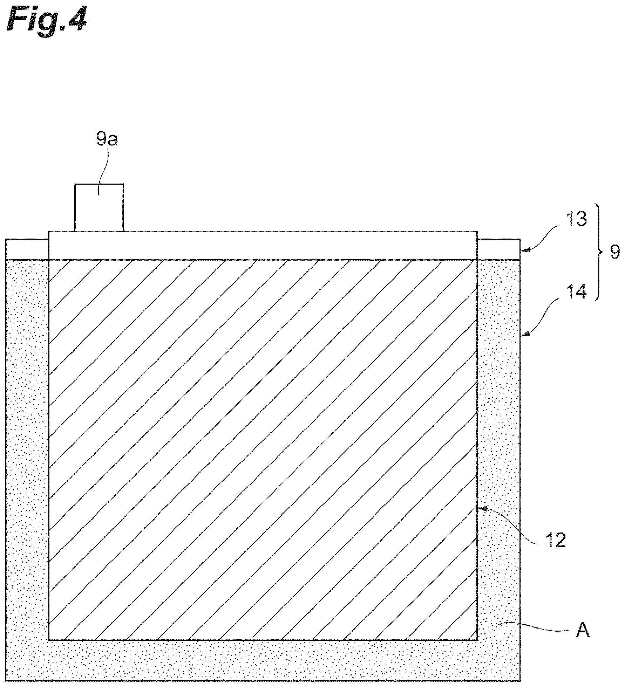

Figure 4 is a view showing the positive electrode plate 9 and the porous film 12 viewed from the layering direction of the positive electrode plates 9 and negative electrode plates 10. The porous film 12 is installed to cover at least a part of a region A that includes the positive electrode active material on the main face 9s of the positive electrode plate 9. The region A that includes the positive electrode active material on the main face 9s of the positive electrode plate 9 may be restated as a region where the positive electrode active material is present in the main face 9s of the positive electrode plate 9, or as a region covered with the positive electrode active material in the main face 9s of the positive electrode plate 9. The area of the overlapping portion of the region A and a face of the porous film perpendicular to the layering direction of the porous film 12 (layering direction of positive electrode plate 9 and negative electrode plate 10) is preferably 80% or more of the area of the region A, more preferably 90% or more of the area of the region A, still more preferably the same (100%) as the area of the region A, from the perspectives of preventing the falling of the positive electrode active material from the positive electrode plate and further suppressing the liquid reduction of the electrolytic solution. Incidentally, in Figure 4, the part shown as sand soil hatching is the region A that includes a positive electrode active material in the face perpendicular to the layering direction of the positive electrode plate 9 (main face 9s of positive electrode plate 9), and the part shown as oblique hatching is an overlapping portion of the region A and a face perpendicular to the layering direction of the porous film 12.

Next, the details of the positive electrode plate 9, the negative electrode plate 10, the separator 11 and the porous film 12 which constitute a lead storage battery are described.

<Positive electrode plate>

The positive electrode active material contains $PbO_2$ as Pb component and further contains Pb components other than $PbO_2$ (for example, $PbSO_4$) and additives on an as needed basis, which will be described later. As described later, the positive electrode active material can be obtained by operations of: aging and drying a positive electrode active material paste containing a raw material of the positive electrode active material to thereby obtain an unformed positive electrode active material; and then performing the formation of the unformed positive electrode active material. The raw material of the positive electrode active material is not particularly limited, and examples thereof include lead powder. Examples of the lead powder include lead powder (mixture of main component PbO powder and scaly metallic lead, in ball mill type lead powder producing machine) which is produced, for example, by a ball mill type lead powder producing machine or a Burton-pot type lead powder producing machine. As the raw material of the positive electrode active material, red lead ($Pb_3O_4$) may be added thereto.

The content of the Pb components in the positive electrode active material is preferably 90 mass% or more, more preferably 95 mass% or more, still more preferably 98 mass% or more, based on the total mass of the positive electrode active material, from the perspective of further excellence in the low-temperature high-rate discharge performance and from the perspective of improving the cycle life properties. The content of the Pb components may be 100 mass% or less based on the total mass of the positive electrode active material from the perspectives of manufacturing cost reduction and weight reduction. From these perspectives, the content of the Pb components may be 90 to 100 mass%, 95 to 100 mass%, or 98 to 100 mass%.

The positive electrode active material contains at least $\beta\text{-}PbO_2$ as Pb component. The positive electrode active material preferably contains $\alpha\text{-}PbO_2$ from the perspective of easily improving the cycle life properties. The positive electrode active material may not contains $\alpha\text{-}PbO_2$.

The ratio ($\alpha\text{-}PbO_2/\beta\text{-}PbO_2$) between peak intensities of $\alpha\text{-}PbO_2$ and $\beta\text{-}PbO_2$ in the X-ray diffraction pattern in the positive electrode active material is 0.60 or less, from the perspective of obtaining excellent low-temperature high-rate discharge performance. With the ratio $\alpha\text{-}PbO_2/\beta\text{-}PbO_2$ of 0.60 or less, excellent low-temperature high-rate discharge performance can be obtained even with a reduced amount of the positive electrode active material for use. The ratio $\alpha\text{-}PbO_2/\beta\text{-}PbO_2$ is preferably 0.50 or less, more preferably 0.40 or less, still more preferably 0.30 or less, from the perspective of obtaining further excellent low-temperature high-rate discharge performance. The ratio $\alpha\text{-}PbO_2/\beta\text{-}PbO_2$ is preferably 0.01 or more, more preferably 0.10 or more, still more preferably 0.25 or more, from the perspective of obtaining excellent cycle life properties. From these perspectives, the ratio $\alpha\text{-}PbO_2/\beta\text{-}PbO_2$ may be 0.01 to 0.60, 0.01 to 0.50, 0.10 to 0.40, or 0.25 to 0.30. The ratio $\alpha\text{-}PbO_2/\beta\text{-}PbO_2$ is a ratio in the positive electrode active material after formation (in fully charged state). The ratio $\alpha\text{-}PbO_2/\beta\text{-}PbO_2$ can be adjusted, for example, by the amount of dilute sulfuric acid for use in producing of the positive electrode active material, the temperature during formation, or the like. For example, the ratio of $\beta\text{-}PbO_2$ can be increased with increase in the amount of dilute sulfuric acid for use in producing of the positive electrode active material, while the ratio of $\alpha\text{-}PbO_2$ can be increased with increase in the formation temperature of dilute sulfuric acid.

As a result of the wide angle X-ray diffraction of the positive electrode active material, for example, $\alpha\text{-}PbO_2$, $\beta\text{-}PbO_2$, and $PbSO_4$ are detected as main compounds. Using main peak intensities (cps) of waveforms identified as chemical compounds of $\alpha\text{-}PbO_2$ and $\beta\text{-}PbO_2$ respectively, the ratio "main peak intensity of $\alpha\text{-}PbO_2$"/"main peak intensity of $\beta\text{-}PbO_2$" can be calculated as ratio $\alpha\text{-}PbO_2/\beta\text{-}PbO_2$. As the wide angle X-ray diffraction apparatus, for example, an X-ray diffraction apparatus SmartLab (manufactured by Rigaku Corporation) may be used.

The wide angle X-ray diffraction measurement can be carried out, for example, by a method as follows.

[Method of wide angle X-Ray diffraction measurement]

- Measuring apparatus: full automatic multipurpose horizontal type X-ray diffraction apparatus SmartLab (made by Rigaku Corporation)
- X-ray source: Cu-K$\alpha$/1.541862 Å
- Filter: Cu-K$\beta$
- Output: 40 kV, 30 mA
- Scan mode: CONTINUOUS
- Scan range: 20.0000 degrees to 60.0000 degrees
- Step width: 0.0200 degrees
- Scan axis: $2\theta/\theta$
- Scan speed: 10.0000 degrees/minute
- Sample holder: made from glass, depth of 0.2 mm
- Sample preparation method: the measurement sample can be prepared by the following procedure. First, the formed battery is disassembled; the positive electrode plate is taken out and is washed with water; and then is dried at 50°C for 24 hours. Next, 3 g of the positive electrode active material is collected from the center portion of the above described positive electrode plate and is ground.

- Calculation method: the positive electrode active material is filled so that the thickness of the positive electrode active material is equal to the depth of the sample holder to form a smooth sample surface. The wide angle X-ray diffraction is measured to obtain an X-ray diffraction pattern (X-ray diffraction chart) of diffraction angle ($2\theta$) versus diffraction peak intensity. In the X-ray diffraction pattern, for example, $\alpha$-$PbO_2$ which is positioned at a diffraction angle of 28.6 degrees and $\beta$-$PbO_2$ which is positioned at a diffraction angle of 25.3 degrees are detected. Using the peak intensities (cps) of the waveforms identified as chemical compounds of $\alpha$-$PbO_2$ (110 plane) and $\beta$-$PbO_2$ (111 plane), respectively, the ratio "peak intensity of $\alpha$-$PbO_2$"/"peak intensity of $\beta$-$PbO_2$" is calculated as the ratio $\alpha$-$PbO_2$/$\beta$-$PbO_2$.

The specific surface area of the positive electrode active material is preferably 7.0 $m^2$/g or more, more preferably 9.0 $m^2$/g or more, still more preferably 12.0 $m^2$/g or more, form the perspective of further excellence in the low-temperature high-rate discharge performance. The upper limit of the specific surface area of the positive electrode active material is not limited, and may be 20 $m^2$/g or less, 15 $m^2$/g or less, or 13 $m^2$/g or less, from the perspective of practical use. Incidentally, the specific surface area of the positive electrode active material is a specific surface area of the positive electrode active material after formation (fully discharged state). The specific surface area of the positive electrode active material can be adjusted, for example, by the amount of sulfuric acid and water added when the below-mentioned positive electrode active material paste is prepared, by refinement of the active material in an unformed state, or by alteration of formation conditions.

The specific surface area of the positive electrode active material can be measured, for example, by the BET method. The BET method is a method of making the surface of a measurement sample adsorb an inert gas of which one molecule size is known (for example, nitrogen gas), and determining the surface area from the amount adsorbed and the occupying area of the inert gas; and is a general measurement method of the specific surface area.

The content of the positive electrode active material may be 60 mass% or less, 55 mass% or less, or 53 mass% or less, based on the total mass of the positive electrode plate, from the perspectives of manufacturing cost reduction and weight reduction. The content of the positive electrode active material may be 40 mass% or more based on the total mass of the positive electrode plate, from the perspective of easily obtaining low-temperature high-rate discharge performance. In other words, the content of the positive electrode active material may be 40 to 60 mass%, 40 to 55 mass%, or 40 to 53 mass%. The liquid-type lead storage battery in the present embodiment can achieve excellent low-temperature high-rate discharge performance and suppress liquid reduction of an electrolytic solution, even with a content of the positive electrode active material for use in the range.

The positive electrode current collector functions as a conduction path of the current from the positive electrode active material and retains the positive electrode active material. The positive electrode current collector is, for example, in a grid shape. Examples of the composition of the positive electrode current collector include lead alloys such as a lead-calcium-tin-based alloy and a lead-antimony-arsenic-based alloy. Selenium, silver, bismuth or the like may be appropriately added to the positive electrode current collector according to the application. The positive electrode current collector can be obtained by forming these lead alloys into a grid shape by a gravity casting method, an expanding method, a stamping method or the like.

In the producing step of the positive electrode plate, for example, the positive electrode current collector is filled with a positive electrode active material paste, and then subjected to aging and drying, so that a positive electrode plate having an unformed positive electrode active material is obtained. The unformed positive electrode active material preferably contains tribasic lead sulfate as main component. The positive electrode active material paste contains, for example, a raw material of the positive electrode active material and may further contains other specific additives.

Examples of the additive contained in the positive electrode active material paste include a carbon material (excluding carbon fiber) and a short fiber for reinforcement (acrylic fiber, polyethylene fiber, polypropylene fiber, polyethylene terephthalate fiber, carbon fiber and the like). Examples of the carbon material include carbon black and graphite. Examples of the carbon black include furnace black, channel black, acetylene black, thermal black and Ketchen black.

In producing of the positive electrode active material paste, lead powder can be used as the raw material of the positive electrode active material. Also, from the perspective of reducing the formation time, red lead ($Pb_3O_4$) may be added as a raw material of positive electrode active material. After the positive electrode current collector (for example, positive electrode current collector grid) is filled with the positive electrode active material paste, aging and drying are performed to obtain a positive electrode plate having an unformed positive electrode active material. The amount of the short fiber for reinforcement blended in the positive electrode active material paste may be 0.005 to 0.3 mass% based on the total mass of the raw material of the positive electrode active material.

The positive electrode active material having a ratio $\alpha$-$PbO_2$/$\beta$-$PbO_2$ of 0.60 or less can be obtained, for example, by the following method.

(1) Method using lead powder as raw material of positive electrode active material

To lead powder, additives such as short fiber for reinforcement are added to be dry-mixed. Subsequently, to the mixture containing the lead powder, 4 to 10 mass% of water and 5 to 10 mass% of dilute sulfuric acid (specific gravity: 1.28) are added and kneaded to prepare a positive electrode active material paste. The dilute sulfuric acid (specific gravity: 1.28) may be gradually added in batches for reduction in heat generation. In producing of the positive electrode active material paste, rapid heat generation results in formation of a positive electrode active material having a sparse structure, which reduces the bonding strength among the active materials in the life, so that it is desirable to minimize the heat generation.

(2) Method using lead powder and red lead ($Pb_3O_4$) as raw material of positive electrode active material

First, to the lead powder, additives such as short fiber for reinforcement are added and dry-mixed. Subsequently, to the mixture containing the lead powder, 4 to 10 mass% of water is added, and the mixture is kneaded to prepare a first paste. The amount of water blended is an amount blended based on the total mass of the lead powder and the additives.

Next, red lead ($Pb_3O_4$) and 15 to 25 mass% of a first dilute sulfuric acid (specific gravity: 1.3 to 1.4) are mixed and then kneaded. Subsequently, 5 to 20 mass% of a second dilute sulfuric acid (specific gravity: 1.45 to 1.6) is added thereto and then kneaded to prepare a second paste (produce of lead dioxide ($PbO_2$) and lead sulfate ($PbSO_4$) as reaction products of red lead and dilute sulfuric acid). The amounts of the first and second dilute sulfuric acids blended are amounts blended based on the total amount of the lead powder and the red lead for use in preparation of the first paste, respectively.

The second paste is then added to the first paste, and the mixture is kneaded for 1 hour, so that a positive electrode active material paste is prepared. In the positive electrode active material paste, the ratio between the lead powder contained in the first paste and the red lead contained in the second paste may be adjusted to a mass ratio lead powder/red lead of 90/10 to 80/20. Also, the total amount of water may be 3 to 8 mass% based on the total mass of lead powder and red lead. In the term "water", water in dilute sulfuric acid is not included.

The positive electrode active material can be obtained by aging and drying the positive electrode active material paste containing a raw material of the positive electrode active material to thereby obtain an unformed positive electrode active material, and then forming the unformed positive electrode active material. The positive electrode active material contains, for example, $\alpha$-$PbO_2$ and $\beta$-$PbO_2$.

A positive electrode plate having the unformed positive electrode active material is obtained by filling a positive electrode current collector (for example, cast grid body and expanded grid body) with the positive electrode active material paste and then performing aging and drying. The amount of the short fiber for reinforcement blended in the positive electrode active material paste may be 0.05 to 0.3 mass% based on the total mass of the lead powder (total mass of lead powder and red lead in the case of containing read lead).

The aging may be performed under atmosphere conditions at a temperature of 35 to 85°C and a humidity of 50 to 98 RH%, for 15 to 60 hours. The drying may be performed under conditions at a temperature of 45 to 80°C for 15 to 30 hours.

<Negative electrode plate>

The negative electrode active material contains at least Pb as Pb component and further contains Pb components other than Pb (for example $PbSO_4$) and additives described below on an as needed basis. The negative electrode active material preferably contains porous spongy lead. The negative electrode active material can be obtained by aging and drying a negative electrode active material paste containing a raw material of the negative electrode active material to thereby obtain an unformed negative electrode active material and then forming the unformed negative electrode active material. The raw material of the negative electrode active material is not particularly limited, and examples thereof include lead powder. Examples of the lead powder include lead powder produced, for example, by a ball mill type lead powder producing machine or a Burton-pot type lead powder producing machine (mixture of main component PbO powder and scaly metallic lead, in ball mill type lead powder producing machine).

The negative electrode current collector functions as a conduction path of the current from the negative electrode active material and retains the negative electrode active material. The composition of the negative electrode current collector may be the same as the composition of the positive electrode current collector.

In the producing step of the negative electrode plate, for example, by filling the negative electrode current collector (for example negative electrode current collector grid) with the negative electrode active material paste and then performing aging and drying to thereby obtain a negative electrode plate having an unformed negative electrode active material. As the negative electrode current collector, the same one as the positive electrode current collector can be used. The unformed negative electrode active material preferably contains tribasic lead sulfate as main component. The unformed negative electrode active material paste contains, for example, a raw material of the negative electrode active material and a resin having a sulfo group and/or a sulfonate group, and may further contain other specific additives.

The negative electrode active material paste may further contain a solvent and sulfuric acid. Examples of the solvent include water (for example, ion exchange water) and an organic solvent.

Examples of the resin having a sulfo group and/or a sulfonate group may include at least one selected from the group consisting of lignin sulfonic acid, lignin sulfonates, and condensates of phenols, aminoaryl sulfonic acid and formaldehyde (for example, condensate of bisphenol, aminobenzene sulfonic acid and formaldehyde).

Examples of the additives contained in the negative electrode active material paste include barium sulfate, a carbon material (excluding carbon fiber), and a short fiber for reinforcement (acrylic fiber, polyethylene fiber, polypropylene fiber, polyethylene terephthalate fiber, carbon fiber and the like). Examples of the carbon material include carbon black and graphite. Examples of the carbon black include furnace black, channel black, acetylene black, thermal black and Ketchen black.

The negative electrode active material paste can be obtained, for example, by the following method. First, a lead powder is mixed with a resin having a sulfo group and/or a sulfonate group, and with an additive added on an as needed basis, so that a mixture is obtained. Subsequently, sulfuric acid (dilute sulfuric acid or the like) and a solvent (water or the like) are added to the mixture, and the mixture is kneaded to obtain a negative electrode active material paste.

In the case of using barium sulfate in the negative electrode active material paste, the amount of barium sulfate blended may be 0.01 to 1 mass% based on the total mass of the raw material of the negative electrode active material. In the case of using carbon material, the amount of the carbon material blended may be 0.2 to 1.4 mass% based on the total mass of the raw material of the negative electrode active material. The amount of the resin having a sulfo group and/or a sulfonate group blended is preferably 0.01 to 2 mass%, more preferably 0.05 to 1 mass%, still more preferably 0.1 to 0.5 mass%, in terms of resin solid content based on the total mass of the raw material of the negative electrode active material.

The aging conditions under an atmosphere at a temperature of 35 to 85°C and a humidity of 50 to 98 RH% for 15 to 60 hours may be employed. The drying conditions with a temperature of 45 to 80°C for 15 to 30 hours may be employed.

<Separator>

A separator has a function for preventing electrical connection between the positive electrode plate and the negative electrode plate and transmitting sulfate ions of the electrolytic solution. Examples of the material for constituting the separator include polyethylene (PE) and polypropylene (PP). The separator may be a woven fabric, a nonwoven fabric, a porous film or the like made of the material, with inorganic particles of $SiO_2$, $Al_2O_3$ or the like adhering thereto.

The thickness of the separator is preferably 0.1 mm to 0.5 mm, more preferably 0.2 mm to 0.3 mm. With a thickness of the separator of 0.1 mm or more, the strength of the separator can be secured. With a thickness of the separator of 0.5 mm or less, the increase in the internal resistance of the battery can be suppressed.

The average pore diameter of the separator is preferably 10 nm to 500 nm, more preferably 30 nm to 200 nm. With an average pore diameter of the separator of 10 nm or more, the sulfate ions are suitably transmitted, so that the diffusion rate of the sulfate ions can be secured. With an average pore diameter of the separator of 500 nm or less, the growth of lead dendrites is inhibited, so that short-circuiting hardly occurs.

<Porous film>

The porous film is not particularly limited, so long as the film is porous, and may be, for example, a nonwoven fabric. The material for constituting the porous film is not particularly limited, so long as the material has resistance to the electrolytic solution. Specific examples of the constituent material of the porous film include organic fiber, inorganic fiber, pulp and inorganic oxide powder. As the constituent material of the porous film, a mixed fiber including inorganic fiber and pulp may be used, or a mixed fiber including organic fiber and inorganic fiber may be used. Examples of the organic fiber include polyolefin fiber (polyethylene fiber, polypropylene fiber or the like) and polyethylene terephthalate fiber. Examples of the inorganic fiber include glass fiber. From the perspective of further suppressing the liquid reduction of the electrolytic solution and the perspective of excellence in the cycle life properties, the porous film is preferably a glass mat made by processing glass fiber into a felt form. Examples of the glass fiber include chopped strand and milled fiber. Incidentally, the glass mat may be made of glass fiber alone or may include a material other than glass fiber (for example, the organic fiber described above).

The thickness of the porous film may be 0.1 mm or more, 0.5 mm or more, or 1.0 mm or more, from the perspective of further suppressing the liquid reduction and the perspective of preventing stratification. The thickness of the porous film may be 2.0 mm or less, 1.0 mm or less, or 0.5 mm or less, from the perspective of improving the charge-discharge performance (for example, charge acceptability and low-temperature high-rate discharge performance). From these perspectives, the thickness of the porous film may be 0.1 to 2.0 mm, 0.1 to 1.0 mm, 0.1 to 0.5 mm, 0.5 to 2.0 mm, 0.5 to 1.0 mm, or 1.0 to 2.0 mm.

The average pore diameter of the porous film may be 200 $\mu$m or less, 100 $\mu$m or less, or 10 $\mu$m or less, from the perspective of improving the charge-discharge performance (for example, charge acceptability and low-temperature high-rate discharge performance). The average pore diameter of the porous film may be 0.1 $\mu$m or more. In other words, the thickness of the porous film may be 0.1 to 200 $\mu$m, 0.1 to 100 $\mu$m, or 0.1 to 10 $\mu$m. The average pore diameter of the porous film is calculated as a median diameter which is a value on the X-axis (pore diameter) corresponding to the intermediate value between the minimum value and the maximum value on the Y-axis (pore volume or pore specific surface area) of the distribution curve in the integrated pore diameter distribution measured by mercury intrusion. The average pore diameter of the porous film may be measured, for example, by AUTOPORE IV 9500 manufactured by Shimadzu Corporation.

The porosity of the porous film may be 40% or more from the perspectives of securing the diffusibility of sulfonate ions and enlarging the space for retaining sulfonate ions as well. The porosity of the porous film may be 97% or less. In other words, the porosity of the porous film may be 40 to 97%. The porosity of the porous film is calculated based on the real volume and the apparent volume of a sample in a rectangular parallelepiped shape having an appropriate size cut out from the porous film according to the following equations (1) to (3).

$$\text{Porosity (\%)} = \{1 - (\text{Real volume/Apparent volume})\} \times 100 \ ... \ (1)$$

$$\text{Real volume (cm}^3) = \text{Measured weight (g)/Density (g/cm}^3) \ ... \ (2)$$

$$\text{Apparent volume (cm}^3) = \text{Length (cm)} \times \text{Width (cm)} \times \text{Thickness (cm)} \ ... \ (3)$$

Incidentally, all of the length, the width and the thickness of the sample used in calculation of the apparent volume are measured values.

The liquid-type lead storage battery in the present embodiment described above has a ratio ($\alpha$-PbO$_2$/$\beta$-PbO$_2$) between peak intensities of $\alpha$-PbO$_2$ and $\beta$-PbO$_2$ in the X-ray diffraction pattern in the positive electrode active material of 0.60 or less, so that excellent low-temperature high-rate discharge performance can be obtained even with a reduced amount of the positive electrode active material for use.

Also, since the liquid-type lead storage battery in the present embodiment has a porous film, excellent performance for suppressing the liquid reduction of the electrolytic solution (liquid reduction suppression performance) can be achieved. Although the reason for obtaining the effect is unknown, the present inventors presumes the reason as follows. In the case where a porous film is present between the positive electrode plate and the negative electrode plate, the gas generated in overcharging is captured in the porous film, so that the gas is present in the interface between the active material and the electrolytic solution. As a result, the area of the interface between the active material and the electrolytic solution decreases, so that the overvoltage for the gas generation increases. It is presumed that the liquid reduction of the electrolytic solution is thereby suppressed.

As a result of examination by the present inventors, it has been found that when the ratio ($\alpha$-PbO$_2$/$\beta$-PbO$_2$) in the positive electrode active material is controlled to 0.60 or less for reduction in the amount of the positive electrode active material for use, the positive electrode active material is made into a muddy state, easily dropping off from the positive electrode current collector, so that the cycle life properties decline in some cases. On the other hand, in the present embodiment, the porous film is closely adhered to the positive electrode plate, inhibiting the dropping of the positive electrode active material, so that the cycle life properties of the lead storage battery can be improved. In the case of using a porous film of glass mat, the effect is significant.

Incidentally, in an ISS vehicle and a power generation control vehicle, the discharge of the lead storage battery is intermittently performed to cause insufficient charging, and the battery is used in a partially charged state referred to as PSOC (partial state of charge). When the lead storage battery is not completely charged and is used in a state of insufficient charge, a stratification phenomenon occurs, wherein a difference in the concentration of dilute sulfuric acid as an electrolytic solution arises between an upper part and a lower part of an electrode (electrode plate or the like) in the battery. This is caused by insufficient stirring of the electrolytic solution due to incomplete charging. In this case, the concentration of dilute sulfuric acid becomes high in the lower part of the electrode, and therefore, the sulfation occurs.

Sulfation is a phenomenon in which lead sulfate as discharge product hardly returns to a charged state. The occurrence of sulfation, therefore, results in a reaction concentrated in the upper part of the electrode only. As a result, in the upper part of the electrode, degradation such as weakened binding between the active materials proceeds, causing exfoliation of the active materials from the current collector, which results in decline of the battery performance and the shortened life. For the recent lead storage battery, improvement in the charge acceptability has been very import in order to improve the life performance of the battery for use in a state of PSOC. In the case of reducing the amount of the positive electrode active material for use, however, the charge acceptability decreases as the amount of the positive electrode active material for use is reduced in some cases. On the other hand, according to the liquid-type lead storage battery described above, excellent charge acceptability tends to be easily obtained even when the amount of the positive electrode active material for use is reduced.

<Method for producing liquid-type lead storage battery>

A method for producing a liquid-type lead storage battery in the present embodiment includes, for example, an electrode plate producing step of obtaining electrode plates (positive electrode plate and negative electrode plate) and an assembling step of assembling constituent components including electrodes into a liquid-type lead storage battery.

In the method for producing a lead storage battery, for example, the positive electrode plates and the negative electrode plates produced as described above are layered through a separator and a porous film, and current collection parts of the electrodes having the same polarity are welded with a strap to obtain an electrode group. The electrode groups are arranged in a battery case to make an unformed battery. Subsequently, the unformed battery is filled with dilute sulfuric acid, and a direct current is applied thereto to perform battery case formation. The specific gravity of sulfuric acid at 20°C after formation is adjusted to an appropriate specific gravity of electrolytic solution to obtain a lead storage battery. The specific gravity of sulfuric acid at 20°C for use in formation may be 1.15 to 1.25. The specific gravity of sulfuric acid at 20°C after formation is preferably 1.25 to 1.33, more preferably 1.26 to 1.30.

The formation conditions and the specific gravity of sulfuric acid can be adjusted corresponding to the size of electrode. The formation treatment is performed after the assembling step without limitation thereto, or may be performed in the electrode plate producing step (tank formation).

Though the lead storage battery and the producing method thereof in the present embodiment have been described above, the present invention is not limited to the embodiments.

For example, the porous film may be installed between the positive electrode plate and the separator, in such a way as to be at a distance from the positive electrode plate. In this case, the distance between the porous film and the positive electrode plate (shortest distance in layering direction) may be 2.0 mm or less, 1.0 mm or less, or 0.5 mm or less, from the perspective of easily obtaining the liquid reduction effect of the electrolytic solution. However, from the perspective of obtaining the effect for inhibiting dropping of the positive electrode active material, it is preferable that the porous film be in contact with the positive electrode plate, and it is more preferable that the porous film be in close adherence to the positive electrode plate. Also, from the same perspective, it is more preferable that the porous film be installed in such a way as to cover the entire area of the positive electrode active material in the main face of the positive electrode plate.

Also, the porous film may be installed between the separator and a negative electrode plate. In this case, the stratification can be suppressed, so that excellent cycle life properties tend to be achieved. The porous film may be installed in contact with the negative electrode plate (for example, in a closely adhered state), or may be installed in such a way as to be at a distance from the negative electrode plate. The distance between the porous film and the negative electrode plate (shortest distance in layering direction) may be 2.0 mm or less, 1.0 mm or less, or 0.5 mm or less, from the perspective of easily obtaining the liquid reduction effect of the electrolytic solution.

A plurality of porous films may be used. For example, two or more porous films may be installed between the positive electrode plate and the separator, or porous films may be installed between the positive electrode plate and the separator, and between the negative electrode plate and the separator.

Also, the porous film may be installed in such a way as to cover all of the main face, side face and bottom face of the electrode plate (positive electrode plate or negative electrode plate). For example, a porous film in a sheet shape may cover the surfaces (main face and side face) of the electrode plate in such a way so as to be wound around the electrode plate. Also, although the porous film in the present embodiment is in a sheet shape, the shape of the porous film is not particularly limited and may be, for example, in a sack shape. In the case of the porous film in a sack shape, the electrode plate may be accommodated in the porous film in a sack shape.

Also, although the negative electrode plate is arranged in the separator in a sack shape in the present embodiment, the positive electrode plate may be arranged in the separator in a sack shape. Further, the shape of the separator is not limited to a sack shape, and may be in a sheet shape.

**Example**

The present invention will be specifically described below with reference to examples. However, the present invention is not limited to only the following examples.

<Example 1>

(Production of positive electrode plate)

To lead powder, 0.25 mass% (based on total mass of lead powder) of an acrylic fiber was added as a short fiber for reinforcement, and dry-mixing was performed. Next, 3 mass% of water and 30 mass% of dilute sulfuric acid (specific gravity: 1.55) were added to the above described mixture containing the lead powder, and kneading was performed for 1 hour to produce a positive electrode active material paste. When the positive electrode active material paste was produced, the dilute sulfuric acid (specific gravity: 1.55) was added step by step so as to avoid a rapid temperature rise. The amount of the above described water or the dilute sulfuric acid blended was an amount blended based on the total mass of the lead powder and the short fiber for reinforcement.
An expanded current collector produced by expanding a rolled sheet made from lead alloy was filled with the positive electrode active material paste, and then aged in an atmosphere at a temperature of 50°C and a humidity of 98% for 24 hours. After that, drying was performed at a temperature of 50°C for 16 hours to produce a positive electrode plate having an unformed positive electrode active material.

(Production of negative electrode plate)

Lead powder was used as a raw material of the negative electrode active material. A mixture of 0.2 mass% (resin solid content) of Bisperse P215 (trade name, manufactured by Nippon Paper Industries Co., Ltd., a condensate of bisphenol, aminobenzenesulfonic acid and formaldehyde), 0.1 mass% of a short fiber for reinforcement (acrylic fiber), 1.0 mass% of barium sulfate, and 0.2 mass% of carbonaceous conductive material (furnace black) was added to the lead powder and then dry-mixed (the amount blended is an amount blended based on the total mass of the raw materials of the negative electrode active material). Next, water was added, and then kneading was performed. Subsequently, kneading was performed while dilute sulfuric acid having a specific gravity of 1.280 was added little by little, to thereby produce a negative electrode active material paste. An expanded current collector produced by expanding a rolled sheet made from lead alloy was filled with the negative electrode active material paste, and then aged in an atmosphere at a temperature of 50°C and a humidity of 98% for 24 hours. After that, drying was performed to produce a negative electrode plate having an unformed negative electrode active material.

(Preparation of glass mat)

As the glass mat, a glass mat manufactured by Matsubayashi Kogyo K.K. (thickness: 0.5 mm, fiber diameter of glass fiber: 19 μm) was prepared.

(Assembling of battery)

The unformed negative electrode plate was inserted into a sack-shaped separator made from polyethylene. Next, seven unformed positive electrode plates and eight unformed negative electrode plates inserted into the above described sack-shaped separator were alternately layered through a glass mat. On this occasion, the glass mat was arranged between the positive electrode plate and the separator, closely adhering to the positive electrode plate, such that, when viewed from the layering direction, the area of the overlapping portion of the region of the positive electrode active material of the positive electrode plate in the face perpendicular to the layering direction and a face of the glass mat perpendicular to the layering direction occupied 100% of the area of the region.
Subsequently, ear portions of the electrode plates having the same polarity were welded to each other by a cast-on strap (COS) method to produce an electrode group. The above described electrode group was inserted into the battery case to assemble a 2V single cell battery (which corresponds to single cell of D23 size specified in JIS D 5301). A sulfuric acid solution with a specific gravity of 1.170 was then poured into the battery, which was left to stand in a water tank at 40°C for 1 hour. The battery was then subjected to formation with a constant current of 17 A for 18 hours. The specific gravity of the electrolytic solution (sulfuric acid solution) after the formation was adjusted to 1.29 at 20°C.

(Measurement of ratio $\alpha$-$PbO_2$/$\beta$-$PbO_2$ based on peak intensities in X-Ray diffraction pattern)

The measurement sample was produced according to the following procedure. First, the battery formed according to the procedure described above was disassembled to take out one electrode group. Next, all of the positive electrode plates were taken out from the electrode group taken out and washed with water; and then were dried at 50°C for 24 hours. Next, 3 g of the positive electrode active material was collected from the center portion of the positive electrode plate and was ground. Subsequently, a sample holder was filled with the positive electrode active material in such a way as to have a thickness of the positive electrode active material equal to the depth of the sample holder, with a smooth sample surface; and the measurement of the ratio $\alpha$-$PbO_2$/$\beta$-$PbO_2$ was performed. The ratio $\alpha$-$PbO_2$/$\beta$-$PbO_2$ was assumed to be the average value of the ratios $\alpha$-$PbO_2$/$\beta$-$PbO_2$ calculated for all of the positive electrode plates taken out from the electrode group. The measurement conditions for the ratio $\alpha$-$PbO_2$/$\beta$-$PbO_2$ will be described below.

<Measurement conditions for the ratio $\alpha$-$PbO_2$/$\beta$-$PbO_2$>

- Measuring apparatus: full automatic multipurpose horizontal type X-ray diffraction apparatus SmartLab (made by Rigaku Corporation)
- X-ray source: Cu-K$\alpha$/1.541862 Å
- Filter: Cu-K$\beta$
- Output: 40 kV, 30 mA
- Scan mode: CONTINUOUS
- Scan range: 20.0000 degrees to 60.0000 degrees
- Step width: 0.0200 degrees
- Scan axis: $2\theta/\theta$
- Scan speed: 10.0000 degrees/minute
- Sample holder: made from glass, depth of 0.2 mm
- Calculation method: as a result of measuring the wide angle X-ray diffraction with the use of 3 g of the produced sample (positive electrode active material), $\alpha$-$PbO_2$ which was positioned at a diffraction angle of 28.6 degrees and $\beta$-$PbO_2$ which was positioned at a diffraction angle of 25.3 degrees were detected from the obtained X-ray diffraction chart of the diffraction angle ($2\theta$) and diffraction peak intensity. The ratio of "peak intensity of $\alpha$-$PbO_2$"/"peak intensity of $\beta$-$PbO_2$" was calculated as the ratio $\alpha$-$PbO_2$/$\beta$-$PbO_2$, with the use of the peak intensities (cps) of the waveforms specified as the respective chemical compounds of $\alpha$-$PbO_2$ (110 plane) and $\beta$-$PbO_2$ (111 plane). As a result of measuring in this way, the ratio $\alpha$-$PbO_2$/$\beta$-$PbO_2$ (average value) was 0.02.

(Measurement of specific surface area of positive electrode active material)

The sample for measurement of the specific surface area was produced according to the following procedure. First, the battery formed according to the procedure described above was disassembled to take out one electrode group. Next, all of the positive electrode plates were taken out from the electrode group taken out and washed with water; and then were dried at 50°C for 24 hours. Next, 2 g of the positive electrode active material was collected from the center portion of the positive electrode plate and dried at 130°C for 30 minutes to produce a measurement sample.

While cooling the measurement sample produced as described above with liquid nitrogen, the amount of nitrogen gas adsorbed was measured at a liquid nitrogen temperature according to a multipoint method, and the specific surface area of the positive electrode active material was calculated according to the BET method. The specific surface area of the positive electrode active material was assumed to be the average value of the specific surface areas of the positive electrode active materials calculated for all of the positive electrode plates taken out from the electrode group. The measurement conditions were as follows. The specific surface area (average value) of the positive electrode active material was 12.9 $m^2$/g.

<Measurement conditions of specific surface area>

- Apparatus: Macsorb 1201 (manufactured by Mountech Co., Ltd.)
- Degassing time: 10 minutes at 130°C
- Cooling: 5 minutes with liquid nitrogen
- Adsorption gas flow rate: 25 mL/minute

(Measurement of content of positive electrode active material)

The measurement sample was produced according to the following procedure. First, the battery formed by the procedure described above was dissembled to take out one electrode group. Subsequently, all of the positive electrode plates were taken out from the electrode group taken out and washed with water. The positive electrode plates were then dried at 50°C for 24 hours and the mass of the positive electrode plate was measured after the ear portion was cut away from the positive electrode plate. Next, all of the entire positive electrode active material was taken out from the positive electrode plate to obtain the mass of the positive electrode current collector. The mass of the positive electrode plate excluding the mass of the positive electrode current collector was assumed to be the total mass of the positive electrode active material, and the content of the positive electrode active material was calculated based on the total mass of the positive electrode plate. The average value of the content of the positive electrode active material calculated for all of the positive electrode plates taken out from the electrode group was assumed to be the content of the positive electrode active material. The content (average value) of the positive electrode active material was 43.2 mass%.

<Example 2>

A lead storage battery was produced in a similar way to that in Example 1, except that the amount of water blended when the positive electrode active material paste was produced was changed to 11 mass% (based on total mass of lead powder and short fiber for reinforcement), 23 mass% (based on total mass of lead powder and short fiber for reinforcement) of dilute sulfuric acid (specific gravity: 1.55) was used as dilute sulfuric acid when the positive electrode active material paste was produced, and the specific gravity of the sulfuric acid solution poured at the time of the formation was changed to 1.185. Subsequently, the measurement of the ratio $\alpha$-PbO$_2$/$\beta$-PbO$_2$, the specific surface area of the positive electrode active material, and the content of the positive electrode active material was performed in a similar way to that in Example 1. The measurement results are shown in Table 1.

<Example 3>

A lead storage battery was produced in a similar way to that in Example 1, except that the amount of water blended when the positive electrode active material paste was produced was changed to 9 mass% (based on total mass of lead powder and short fiber for reinforcement), 25 mass% (based on total mass of lead powder and short fiber for reinforcement) of dilute sulfuric acid (specific gravity: 1.34) was used as dilute sulfuric acid when the positive electrode active material paste was produced, and the specific gravity of the sulfuric acid solution poured at the time of formation was changed to 1.200. Subsequently, the measurement of the ratio $\alpha$-PbO$_2$/$\beta$-PbO$_2$, the specific surface area of the positive electrode active material, and the content of the positive electrode active material was performed in a similar way to that in Example 1. The measurement results are shown in Table 1.

<Example 4>

A lead storage battery was produced in a similar way to that in Example 3, except that the water tank temperature was changed to 45°C at the time of the formation. Subsequently, the measurement of the ratio $\alpha$-PbO$_2$/$\beta$-PbO$_2$, the specific surface area of the positive electrode active material, and the content of the positive electrode active material was performed in a similar way to that in Example 1. The measurement results are shown in Table 1.

<Example 5>

A lead storage battery was produced in a similar way to that in Example 1, except that the amount of water blended in preparation of the positive electrode active material paste was changed to 12 mass% (based on the total mass of lead powder and short fiber for reinforcement); 15 mass% (based on total mass of lead powder and short fiber for reinforcement) of dilute sulfuric acid (specific gravity: 1.28) was used as sulfuric acid in preparation of the positive electrode active material paste; the density of the sulfuric acid solution poured at the time of formation was changed to 1.230, and the standstill time after pouring of sulfuric acid was changed to 5 hours. Subsequently, the measurement of the ratio $\alpha$-PbO$_2$/$\beta$-PbO$_2$, the specific surface area of the positive electrode active material, and the content of the positive electrode active material was performed in a similar way to that in Example 1. The measurement results are shown in Table 1.

<Example 6>

A lead storage battery was produced in a similar way to that in Example 5, except that the density of the sulfuric acid solution poured at the time of formation was changed to 1.200. Subsequently, the measurement of the ratio $\alpha$-$PbO_2$/$\beta$-$PbO_2$, the specific surface area of the positive electrode active material, and the content of the positive electrode active material was performed in a similar way to that in Example 1. The measurement results are shown in Table 1.

<Example 7>

A lead storage battery was produced in a similar way to that in Example 5, except that at the time of formation, the standstill time after pouring of sulfuric acid was changed to 1 hour. Subsequently, the measurement of the ratio $\alpha$-$PbO_2$/$\beta$-$PbO_2$, the specific surface area of the positive electrode active material, and the content of the positive electrode active material was performed in a similar way to that in Example 1. The measurement results are shown in Table 1.

<Example 8>

A lead storage battery was produced in a similar way to that in Example 1, except that 11 mass% (based on total mass of lead powder and short fiber for reinforcement) of dilute sulfuric acid (specific gravity: 1.28) was used as sulfuric acid in preparation of the positive electrode active material paste; and the density of the sulfuric acid solution poured at the time of formation was changed to 1.235. Subsequently, the measurement of the ratio $\alpha$-$PbO_2$/$\beta$-$PbO_2$, the specific surface area of the positive electrode active material, and the content of the positive electrode active material was performed in a similar way to that in Example 1. The measurement results are shown in Table 1.

<Comparative Example 1>

A lead storage battery was produced in a similar way to that in Example 1, except that 9 mass% (based on total mass of lead powder and short fiber for reinforcement) of dilute sulfuric acid (specific gravity: 1.28) was used as sulfuric acid in preparation of the positive electrode active material paste; and the density of the sulfuric acid solution poured at the time of formation was changed to 1.240. Subsequently, the measurement of the ratio $\alpha$-$PbO_2$/$\beta$-$PbO_2$, the specific surface area of the positive electrode active material, and the content of the positive electrode active material was performed in a similar way to that in Example 1. The measurement results are shown in Table 1.

<Comparative Example 2>

A lead storage battery was produced in a similar way to that in Comparative Example 1, except that no glass mat was used. Subsequently, the measurement of the ratio $\alpha$-$PbO_2$/$\beta$-$PbO_2$, the specific surface area of the positive electrode active material, and the content of the positive electrode active material was performed in a similar way to that in Example 1. The measurement results are shown in Table 1.

<Comparative Example 3>

A lead storage battery was produced in a similar way to that in Example 8, except that no glass mat was used. Subsequently, the measurement of the ratio $\alpha$-$PbO_2$/$\beta$-$PbO_2$, the specific surface area of the positive electrode active material, and the content of the positive electrode active material was performed in a similar way to that in Example 1. The measurement results are shown in Table 1.

<Comparative Example 4>

A lead storage battery was produced in a similar way to that in Example 7, except that no glass mat was used. Subsequently, the measurement of the ratio $\alpha$-$PbO_2$/$\beta$-$PbO_2$, the specific surface area of the positive electrode active material, and the content of the positive electrode active material was performed in a similar way to that in Example 1. The measurement results are shown in Table 1.

<Comparative Example 5>

A lead storage battery was produced in a similar way to that in Example 6, except that no glass mat was used. Subsequently, the measurement of the ratio $\alpha$-$PbO_2$/$\beta$-$PbO_2$, the specific surface area of the positive electrode active material, and the content of the positive electrode active material was performed in a similar way to that in Example 1. The measurement results are shown in Table 1.

<Comparative Example 6>

A lead storage battery was produced in a similar way to that in Example 3, except that no glass mat was used. Subsequently, the measurement of the ratio $\alpha\text{-}PbO_2/\beta\text{-}PbO_2$, the specific surface area of the positive electrode active material, and the content of the positive electrode active material was performed in a similar way to that in Example 1. The measurement results are shown in Table 1.

<Characteristic evaluation>

The characteristics of lead storage batteries in Examples and Comparative Examples were evaluated according to the following method. The evaluation on the low-temperature high-rate discharge performance and the charge acceptability was performed only for ones with the performance for suppressing liquid reduction ranked as A (excellent).

(Performance for suppressing liquid reduction)

Under an atmosphere at 60°C (temperature of water tank), an overcharge at a constant voltage of 2.4 V for 42 days was performed. The weights before and after the charge were measured to compare the weight difference (amount of liquid reduction due to overcharge (amount of liquid reduced)) for evaluation on the performance for suppressing liquid reduction. The performance for suppressing liquid reduction was relatively evaluated assuming that the measurement result of Comparative Example 1 was 100. The performance for suppressing liquid reduction is more enhanced with decrease in the amount of liquid reduction. A case with a relative evaluation value of 100 or less was rated as A, and a case with a relative evaluation value of more than 100 was rated as B. The results are shown in Table 1.

(Low-temperature high-rate discharge performance)

After the battery temperature of the produced lead storage battery was adjusted to -15°C, constant current discharging was performed at 300 A, and the discharge duration time was measured until the cell voltage fell below 1.0 V to calculate the discharge duration time per unit mass of the positive electrode active material ("discharge duration time"/"content of positive electrode active material (g)". The low-temperature high-rate discharge performance was relatively evaluated assuming that the measurement result of Comparative Example 1 (discharge duration time per unit mass of positive electrode active material) was 100. A case with a relative evaluation value of 135 or more was rated as AAA, a case with a relative evaluation value of 120 or more and less than 135 was rated as AA, a case with a relative evaluation value of 105 or more and less than 120 was rated as A, and a case with a relative evaluation value of 90 or more and less than 105 was rated as B. The results are shown in Table 1.

(Charge acceptability)

The produced lead storage battery after formation was left at rest for about 12 hours, and then subjected to a constant current discharge with a current value of 10.4 A at 25°C for 30 minutes, further standstill for 6 hours, and then a constant voltage charge at 2.33 V with a limiting current of 100 A for 60 seconds. On this occasion, the current value from the start to the fifth second was measured to calculate the current value per unit mass of the positive electrode active material ("current value"/"content of positive electrode active material (g)". Relative evaluation was performed assuming that the measurement result of Comparative Example 1 (current value per unit mass of positive electrode active material) was 100. A case with a relative evaluation value of 120 or more was rated as AA, a case with a relative evaluation value of 105 or more and less than 120 was rated as A, and a case with a relative evaluation value of 90 or more and less than 105 was rated as B. The results are shown in Table 1.

(ISS cycle performance)

The measurement of ISS cycle performance was performed in the following way. The ambient temperature of the produced lead storage battery was adjusted so that the battery temperature became 25°C. A test was performed in which one cycle is an operation of performing the constant current discharging at 45 A for 59 seconds and the constant current discharging at 300 A for one second, and then performing the constant current/constant voltage charging at a limiting current of 100 A and 2.33 V for 60 seconds. This test is a cycle test which simulates the way how the lead storage battery is used in an ISS vehicle. In this cycle test, the charge amount is small with respect to the discharge amount, and therefore, the charge becomes gradually insufficient if the charging is not completely performed; and as a result, the voltage at the first second gradually decreases when the battery was discharged for one second at a discharge current which was set at 300 A. Specifically, when the negative electrode is polarized during the constant current/constant voltage charging, and is switched to the constant voltage charging at an early stage, the charging current decays and the charge becomes insufficient. In this cycle test, the voltage at the first second in the 300 A discharge was measured to obtain the number of cycles when the voltage became less than 1.2 V, so that the number of cycles per unit mass of the positive electrode active material ("number of cycles when voltage became less than 1.2 V"/"content of positive electrode active material (g)") was determined. The ISS cycle performance was relatively evaluated, assuming that the measurement result of Comparative Example 5 (number of cycles per unit mass of positive electrode active material) was 100. A case with a relative evaluation value of more than 85 was rated as A, a case with a relative evaluation value of more than 70 and 85 or less was rated as B, and a case with a relative evaluation value of 70 or less was rated as C. The results are shown in Table 1.

[Table 1]

| | Positive electrode | | | Porous film | Characteristics evaluation | | | | | | | |
|---|---|---|---|---|---|---|---|---|---|---|---|---|
| | $\alpha/\beta$ | Specific surface area ($m^2$/g) | Content of positive electrode active material (mass%) | | Performance for suppressing liquid reduction | | Low-temperature high-rate discharge performance | | Discharge acceptability | | ISS cycle performance | |
| Example 1 | 0.02 | 12.9 | 43.2 | Present | 100 | A | 162 | AAA | 137 | AA | 81 | B |
| Example 2 | 0.03 | 12.2 | 44.2 | Present | 100 | A | 156 | AAA | 130 | AA | 81 | B |
| Example 3 | 0.05 | 11.6 | 45.3 | Present | 100 | A | 149 | AAA | 121 | AA | 82 | B |
| Example 4 | 0.07 | 10.4 | 46.8 | Present | 100 | A | 141 | AAA | 115 | A | 82 | B |
| Example 5 | 0.35 | 10.6 | 47.8 | Present | 100 | A | 135 | AAA | 112 | A | 87 | A |
| Example 6 | 0.38 | 10.3 | 48.3 | Present | 100 | A | 129 | AA | 110 | A | 89 | A |
| Example 7 | 0.42 | 8.9 | 51.4 | Present | 100 | A | 113 | A | 96 | B | 89 | A |
| Example 8 | 0.58 | 7.12 | 53 | Present | 100 | A | 106 | A | 99 | B | 96 | A |
| Comparative Example 1 | 0.67 | 5.98 | 54 | Present | 100 | A | 100 | B | 100 | B | 100 | A |
| Comparative Example 2 | 0.67 | 5.98 | 54 | Absent | 111 | B | - | - | - | - | 82 | B |
| Comparative Example 3 | 0.58 | 7.12 | 53 | Absent | 111 | B | - | - | - | - | 79 | B |
| Comparative Example 4 | 0.42 | 8.9 | 51 | Absent | 111 | B | - | - | - | - | 71 | B |
| Comparative Example 5 | 0.38 | 10.3 | 48 | Absent | 111 | B | - | - | - | - | 70 | C |
| Comparative Example 6 | 0.05 | 11.6 | 45 | Absent | 111 | B | - | - | - | - | 65 | C |
| In Table 1, $\alpha/\beta$ refers to $\alpha$-$PbO_2$/$\beta$-$PbO_2$. | | | | | | | | | | | | |

**Reference Signs List**

1 ··· lead storage battery, 9 ··· positive electrode plate, 10 ··· negative electrode plate, 11 ··· separator, 12 ··· porous film.

**Claims**

1.  A liquid-type lead storage battery comprising a positive electrode plate and a negative electrode plate alternately layered through a separator, wherein
    the liquid-type lead storage battery further comprises a porous film arranged between the positive electrode plate and the negative electrode plate,
    the positive electrode plate comprises a positive electrode active material comprising $PbO_2$, and
    a ratio ($\alpha$-$PbO_2$/$\beta$-$PbO_2$) between peak intensities of $\alpha$-$PbO_2$ and $\beta$-$PbO_2$ in an X-ray diffraction pattern in the positive electrode active material is 0.60 or less.

2.  The liquid-type lead storage battery according to claim 1, wherein the porous film is a glass mat.

3.  The liquid-type lead storage battery according to claim 1 or 2, wherein the specific surface area of the positive electrode active material is 7.0 $m^2$/g or more.

4.  The liquid-type lead storage battery according to any one of claims 1 to 3, wherein the content of the positive electrode active material is 60 mass% or less based on the total mass of the positive electrode plate.

5.  The liquid-type lead storage battery according to any one of claims 1 to 4, wherein the distance between the porous film and the positive electrode plate, or the distance between the porous film and the negative electrode plate is 2.0 mm or less.

6.  The liquid-type lead storage battery according to any one of claims 1 to 5, wherein the porous film is in contact with the positive electrode plate.

7.  The liquid-type lead storage battery according to any one of claims 1 to 6, wherein when viewed in the layering direction of the positive electrode plate and the negative electrode plate, the area of the overlapping portion of a region made of the positive electrode active material in the face perpendicular to the layering direction of the positive electrode plate and a face of the porous film perpendicular to the layering direction is 80% or more of the area of the region.

8.  The liquid-type lead storage battery according to any one of claims 1 to 7, wherein a pore diameter of the porous film is 200 $\mu$m or less.

9.  The liquid-type lead storage battery according to any one of claims 1 to 8, wherein a thickness of the porous film is 0.1 to 2.0 mm.

10. The liquid-type lead storage battery according to any one of claims 1 to 9, wherein a porosity of the porous film is 40% or more.

Fig.1

*Fig.2*

**Fig.3**

EP 3 565 036 A1

# Fig.4

**INTERNATIONAL SEARCH REPORT**

| International application No. |
| --- |
| PCT/JP2017/021846 |

A.    CLASSIFICATION OF SUBJECT MATTER
*H01M4/14*(2006.01)i, *H01M10/12*(2006.01)i

According to International Patent Classification (IPC) or to both national classification and IPC

B.    FIELDS SEARCHED

Minimum documentation searched (classification system followed by classification symbols)
H01M4/14, H01M10/12

Documentation searched other than minimum documentation to the extent that such documents are included in the fields searched
Jitsuyo Shinan Koho          1922–1996    Jitsuyo Shinan Toroku Koho    1996–2017
Kokai Jitsuyo Shinan Koho    1971–2017    Toroku Jitsuyo Shinan Koho    1994–2017

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
| --- | --- | --- |
| X | JP 62-058567 A  (Mitsui Mining & Smelting Co., Ltd.),<br>14 March 1987 (14.03.1987),<br>page 3, lower right column; table 3<br>(Family: none) | 1-10 |
| X | JP 2016-129117 A  (Hitachi Chemical Co., Ltd.),<br>14 July 2016 (14.07.2016),<br>paragraphs [0023], [0031], [0033]<br>(Family: none) | 1-10 |
| X | WO 2016/084858 A1  (Hitachi Chemical Co., Ltd.),<br>02 June 2016 (02.06.2016),<br>claim 1; paragraph [0070]<br>(Family: none) | 1-10 |

☒  Further documents are listed in the continuation of Box C.          ☐  See patent family annex.

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    29 August 2017 (29.08.17) | Date of mailing of the international search report<br>    05 September 2017 (05.09.17) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/021846

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2014-239027 A  (GS Yuasa International Ltd.), 18 December 2014 (18.12.2014), claim 4 (Family: none) | 4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9147871 B